# EUROPEAN PATENT APPLICATION

(11) **EP 4 332 005 A1**
(43) Date of publication of application: **06.03.2024**
(21) Application number: 23183234.6
(22) Date of filing: 04.07.2023
(51) Int. Cl.: B65B 9/04, B29C 65/00, B65B 11/52, B65B 51/14, B65B 51/16

(54) **APPARATUS FOR CLOSING BLISTER PACKS**

(30) Priority: 22.07.2022 IT 202200015432
(71) Applicant: Tecnicam - S.r.l., 40065 Pianoro, Frazione Rastignano (BO) (IT)
(72) Inventor: MARTELLI, Donata, 40136 Bologna (IT)
(74) Representative: Modiano, Micaela Nadia

(57) **Abstract**

An apparatus (1) for closing blister packs (A) which are constituted by a sheet with pockets (B) and a closure film (C) and are designed to accommodate, within each pocket of the sheet (B), at least one product (D). The apparatus (1) comprises at least one presser (2) which is provided on an external active surface (2a) thereof, designed to come into contact with the closure film (C), with a plurality of incisions (3) which are arranged according to any predefined pattern and define at least one continuous closed ridge (3a, 3b) which is arranged around a part of the active surface (2a) that is designed to abut against the rim of at least one pocket of the sheet (B) with the interposition of the closure film (C). The presser (2) is associated with a heating element configured to maintain the external surface (2a) at a specific temperature; the at least one ridge (3a, 3b) provides a closed line of heat-sealing of the film (C) onto the sheet (B), arranged along the perimeter of at least one respective pocket, with consequent isolation of the product (D) contained therein.

## Description

The present invention relates to an apparatus for closing blister packs, of a type suitable to be installed in plants for packaging products that need to be separated from each other and sealed to each other.

Some types of products in the pharmaceutical sector (but also some biocidal products and even, in general, several types of chemical products) need to be packaged separately for the purpose of preventing contamination phenomena.

In particular it is known to use packaging in blister packs of capsules, pastilles and tablets (generically of small solid blocks, pre-dosed with product) and/or of discrete quantities of powders in order to make it possible to separate each individual element from the others present in the same package.

Blister packs are sheets (generally made of polymeric or metallic or composite material) provided with a plurality of pockets distributed on their surface; each pocket is designed to accommodate an individual element (pastille, pill, tablet, generic solid block); the sheet of pockets is covered with a closure film, (generally constituted by aluminum, polymers, paper and the like) that also hermetically closes each pocket and its contents (i.e. the pastille, pill, tablet and/or the generic solid block).

The packaging operations (thermo-forming of the pockets on the sheet, insertion of the respective individual element into each pocket, hermetic closure via the respective film, and cutting to format of each blister pack) are performed using a specific packaging system.

The terms "closing the blister pack" mean in the present discussion the heat-sealing of the closure film (generally constituted by aluminum, polymers, paper and the like) onto the sheet with pockets containing the products (normally each product accommodated in a respective pocket).

This operation is a heat-sealing performed using a heat-sealing plate with the surface that comes into contact with the closure film being knurled.

The purpose of knurling this surface is to increase the cohesion of the film to the sheet with pockets, in that the pressure exerted by the plate on the film juxtaposed with the sheet with pockets (which in turn is supported by a contoured abutment element) makes it possible to imprint the grid, which comprises a plurality of contiguous concavities and convexities, onto the film and the sheet (in so doing increasing the mutual contact surface, at which the heat-sealing is performed).

This surface knurling of the plate therefore consists of a machining thereof that removes a predefined quantity of material in order to provide the grid constituted by a plurality of contiguous concavities and convexities.

Normally this surface grid (the knurling) is provided by way of stock-removal machining (for example milling) or by way of photoengraving (which consists of a chemical attack aimed at removing the part of the plate surface that is not subjected to preliminary protection).

These forms of processing (in particular photoengraving) can be imprecise, in relation to the quantity of material removed (and therefore to the depth and dimensions of the convexities of the grid). It is therefore essential to adopt grids that can be checked easily (and are therefore simple) for the purpose of ensuring that they are suitable to ensure a good adhesion of the closure film to the sheet with pockets.

In any case, the known techniques of providing the grid with a plurality of convexities and concavities require very lengthy timescales to complete a heat-sealing plate, and at high cost.

Furthermore, conventional types of machining (in particular photoengraving) can be applied solely on some types of metals, and therefore cannot be used to provide plates made of materials that have a thermal conductivity that is ideal for the specific application.

Similar problems can arise if, instead of the heat-sealing plate, heat-sealing rollers are used (which have the grid provided on their external lateral surface).

The main drawback encountered lies in the impossibility of ensuring the perfect and secure segregation (isolation) of the product inside the pocket from the outside environment. For this reason the pockets on the sheet are placed at a distance that is such as to guarantee that it is possible to assure isolation along them. In practice much of the sheet with pockets, therefore, does not contain products, given that the "surface density" of the pockets is limited by the above mentioned drawbacks relating to the quality of the heat-sealing of the film C to the sheet B.

The blister pack, closed with a film of material of the type of aluminum, is then subjected to printing processes in order to imprint wordings and indications of various types on the closure film.

The use of inks for printing on the closure film increases the environmental impact of the entire package, in that many inks are classified as pollutant substances, and some of them can generate fumes that are potentially hazardous for the operators present. Furthermore the process of printing on the back of the blister pack entails much higher costs and energy consumption than a printing operation executed, for example, on a simple continuous film.

The aim of the present invention is to solve the above mentioned drawbacks, by providing an apparatus for closing blister packs that makes it possible to imprint knurlings of any shape and type on blister packs during the bonding of the closure film to the sheet with pockets.

Within this aim, an object of the invention is to provide an apparatus for closing blister packs that ensures that the concavities and convexities imprinted on the surface of the blister packs covered by the closure film have extremely precise shapes and dimensions.

Another object of the invention is to provide an apparatus for closing blister packs that makes subsequent operations for printing on the closure film, heat-sealed onto the sheet with pockets, potentially superfluous.

Another object of the present invention is to provide an apparatus for closing blister packs which is of low cost, easily and practically implemented, and safe in use.

This aim and these objects are achieved by an apparatus according to claim 1.

It is also possible to achieve this aim and these objects by way of a method according to claim 10.

Further characteristics and advantages of the invention will become better apparent from the description of a preferred, but not exclusive, embodiment of the apparatus for closing blister packs, which is illustrated by way of non-limiting example in the accompanying drawings wherein:

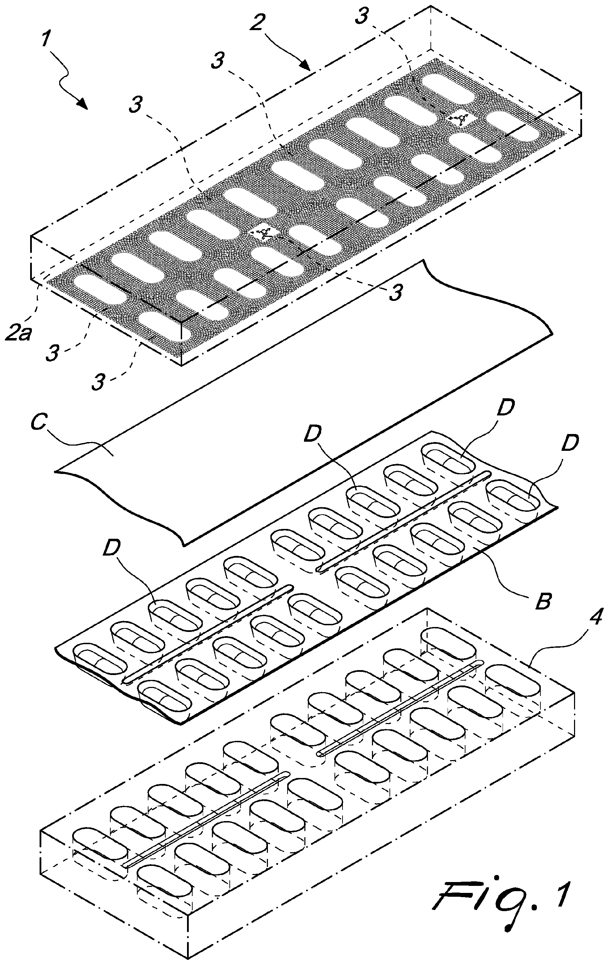

Figure 1 is a schematic perspective view of a possible embodiment of an apparatus for closing blister packs according to the invention, in the inactive configuration;

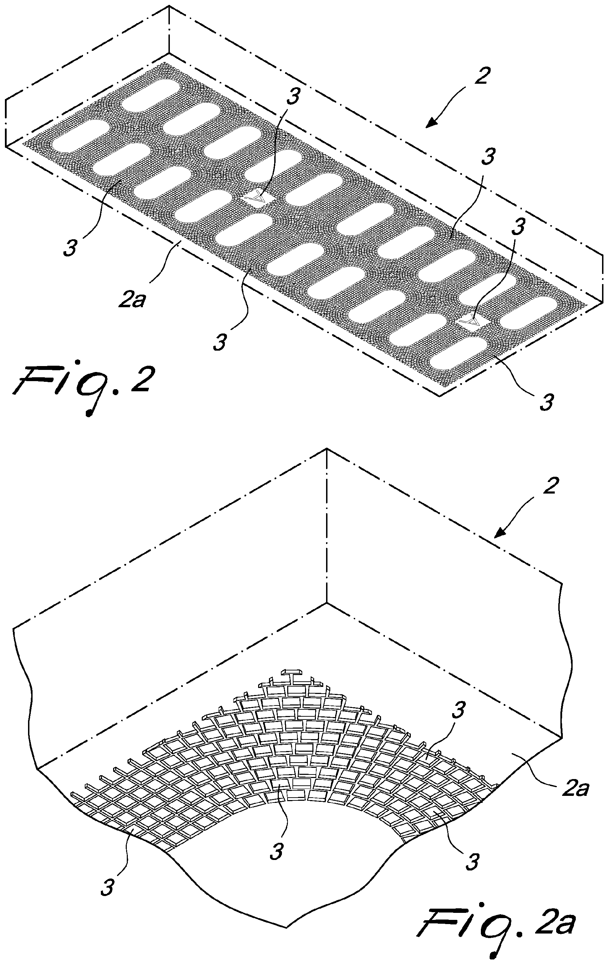

Figure 2 is a schematic perspective view of a presser of the apparatus of Figure 1;
Figure 2a is an enlarged view of a detail of Figure 2;

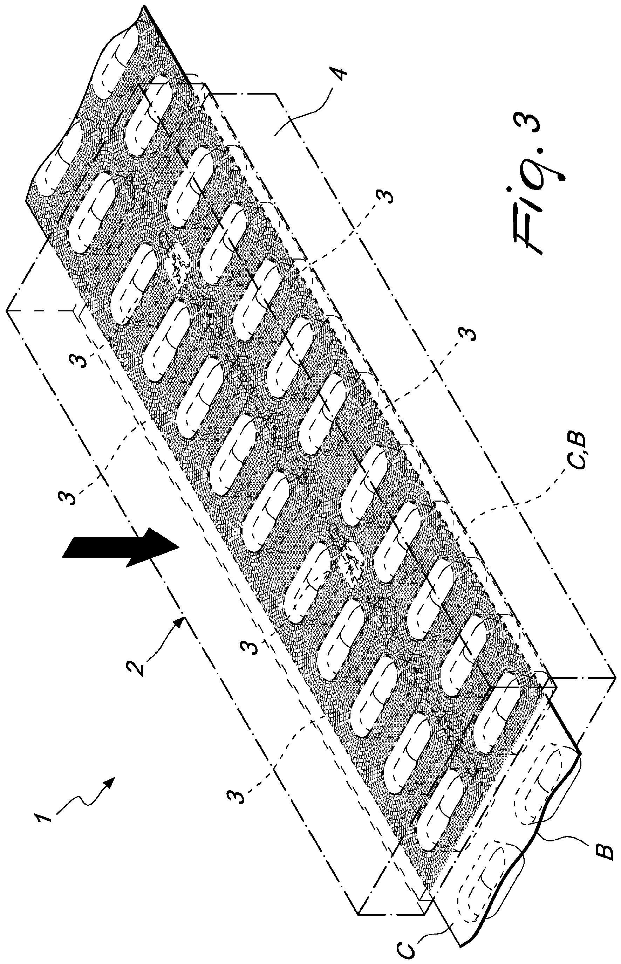

Figure 3 is a schematic perspective view of the apparatus of Figure 1 in the condition of closing the blister pack;

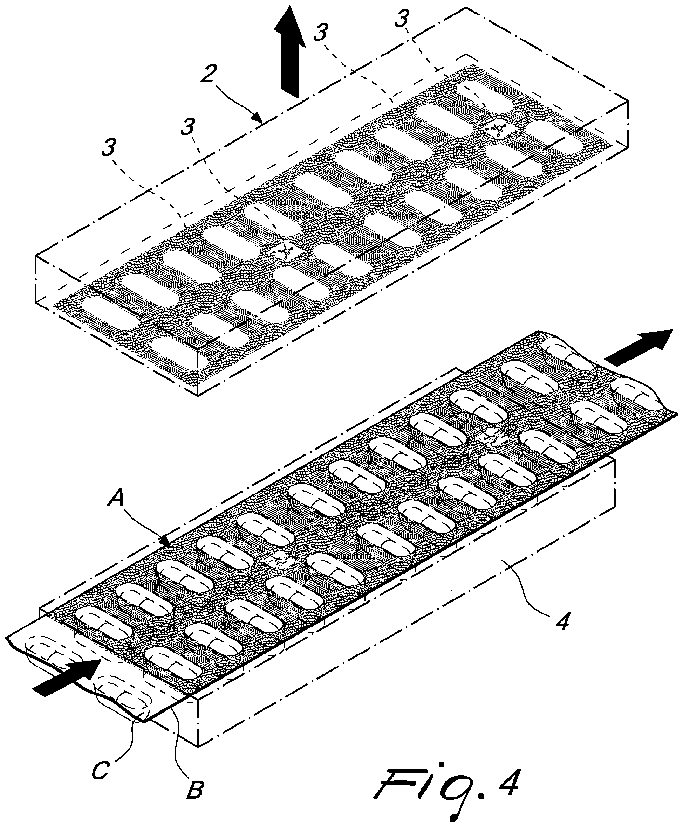

Figure 4 is a schematic perspective view of the apparatus of Figure 1 in the condition of extracting the closed blister pack;

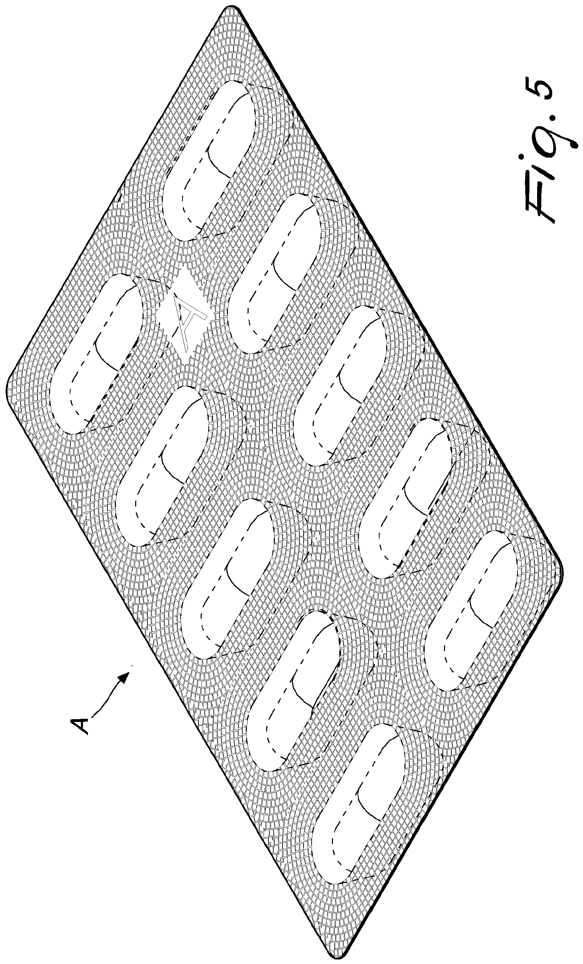

Figure 5 is a schematic perspective view of the blister pack extracted from the apparatus according to the invention;
Figure 6 is a schematic perspective view of a further embodiment of an apparatus for closing blister packs according to the invention;
Figure 7 is a schematic perspective view of a further embodiment of an apparatus for closing blister packs according to the invention;
Figure 8 is an enlarged schematic perspective view of a portion of an abutment element of a possible embodiment of the apparatus for closing blister packs according to the invention;
Figure 9a is an enlarged schematic perspective view of a portion of a presser of an apparatus according to the invention, in which a removable punch has been removed and possible alternative punches are shown;
Figure 9b is an enlarged schematic perspective view of a portion of a presser of an apparatus according to the invention, fitted with one of the possible removable punches;
Figure 10 is an enlarged schematic perspective view of a portion of a presser of an apparatus according to the invention, which comprises a fixed surface machining for representing a logo and a removable punch that comprises a pharmacode;

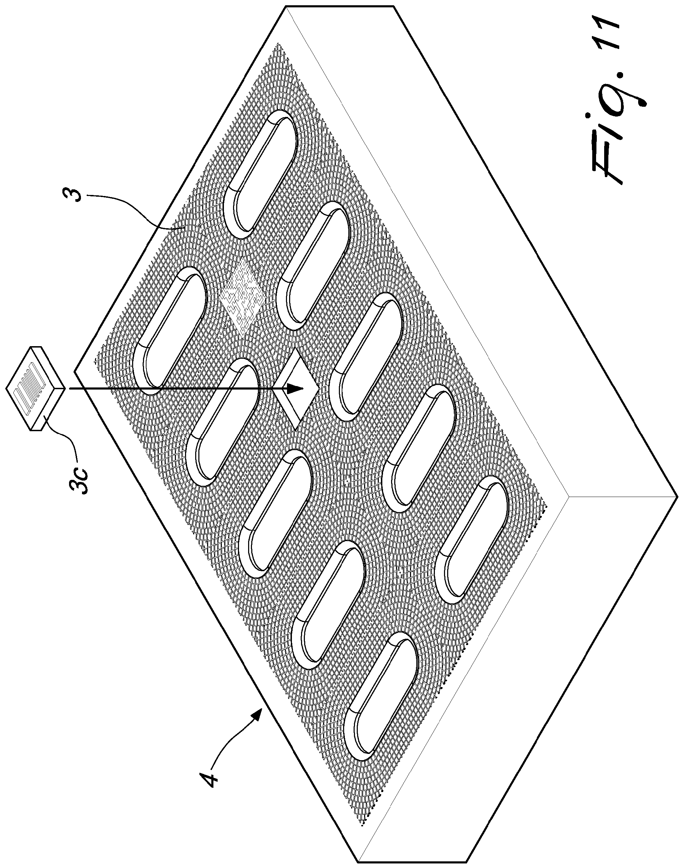

Figure 11 is an enlarged schematic perspective view of a portion of a presser of an apparatus according to the invention, which comprises a fixed surface machining for representing a data matrix and a removable punch that comprises a pharmacode;
Figure 12 is an enlarged schematic perspective view of a portion of a presser of an apparatus according to the invention, which comprises a fixed surface machining for representing a logo and two removable punches that comprise respectively a pharmacode and a data matrix;
Figure 13 is a schematic perspective view of a possible embodiment of a blister pack obtained with the apparatus according to the invention, with enlarged detailed views showing portions provided with elements guarding against counterfeiting and uniquely identifying an original product.

With reference to the figures, the reference numeral 1 generally designates an apparatus for closing blister packs A.

The blister packs A are constituted by a sheet with pockets B and a closure film C: inside each one of the pockets of the sheet with pockets B at least one product D can be accommodated (for example a medicine, a food supplement, a biocidal product, a chemical agent, a fertilizer and, in general, a product that, on the basis of its characteristics, is designed for a specific use and needs to be isolated in order to prevent problems of contamination (of the product by the outside environment or of the outside environment by the product, or cross-contamination).

The apparatus 1 according to the invention comprises at least one presser 2 which is provided on an external active surface 2a thereof, designed to come into contact with the closure film C, with a plurality of incisions 3 which are arranged according to any predefined pattern and define at least one continuous closed ridge 3a, 3b which is arranged around a part of the active surface 2a that is designed to abut against the rim of at least one pocket of the sheet B with the interposition of the closure film C.

In practice, the incisions 3 made on the surface 2a will be arranged so as to define at least one protruding ridge 3a, 3b (the hollows defined by the incisions 3 will be mutually aligned so that their delimiting walls are mutually aligned along the at least one ridge 3a, 3b) which will be closed (in a ring or along a polygon or delimited by a mixtilinear line).

The presser 2 will profitably be associated with a heating element which is configured to keep the external surface 2a at a specific temperature so that it can ensure an effective heat-sealing of the film C to the sheet with pockets B when the presser abuts against them with a predefined pressure.

The at least one ridge 3a, 3b defined by the incisions 3 will provide a closed line of heat-sealing of the film C onto the sheet B, arranged along the perimeter of at least one respective pocket, with consequent isolation of the product D contained therein.

The protrusion of the at least one ridge 3a, 3b will imply the generation of a closed line of heat-sealing of the film C to the sheet B around the perimeter of the respective pocket, ensuring the perfect isolation (and therefore the segregation that will guard against any type of contamination by the outside environment of the inner volume of the pocket and vice versa).

The presser 2 will exert the design pressure on the film C and on the sheet B according to various methods which involve the presence of two mutually opposite pressers 2 bearing incisions 3, or the presence of a single presser 2 and of a contoured abutment element 4 (in such case the cavities designed to accommodate the pockets of the sheet B during the clamping can be indifferently in the presser 3 or in the contoured abutment element), independently of the geometric shape of the presser 2 and of the abutment element 4.

According to the invention, the apparatus 1 can conveniently comprise a contoured abutment element 4 (which, by way of non-limiting example, is shown as being flat in the accompanying figures) for the at least partial accommodation of the sheet with pockets B.

Such contoured abutment element 4 can be profitably configured to accommodate the sheet B without deforming the respective pockets and to tolerate a mechanical pressure applied by the presser 2 in a step of heat-sealing the film C onto the surface that faces it of the sheet B.

It should further be noted that the external active surface 2a of the presser 2 can positively be substantially flat, except for the incisions 3.

The presser 2 will be movable according to a stroke for moving toward and away from the contoured abutment element 4, between a passive configuration, in which it faces and is spaced apart from the contoured abutment element 4, and an active configuration, in which it is substantially in resting contact on the contoured abutment element 4 with the interposition of the sheet B and of the closure film C, which is juxtaposed thereon.

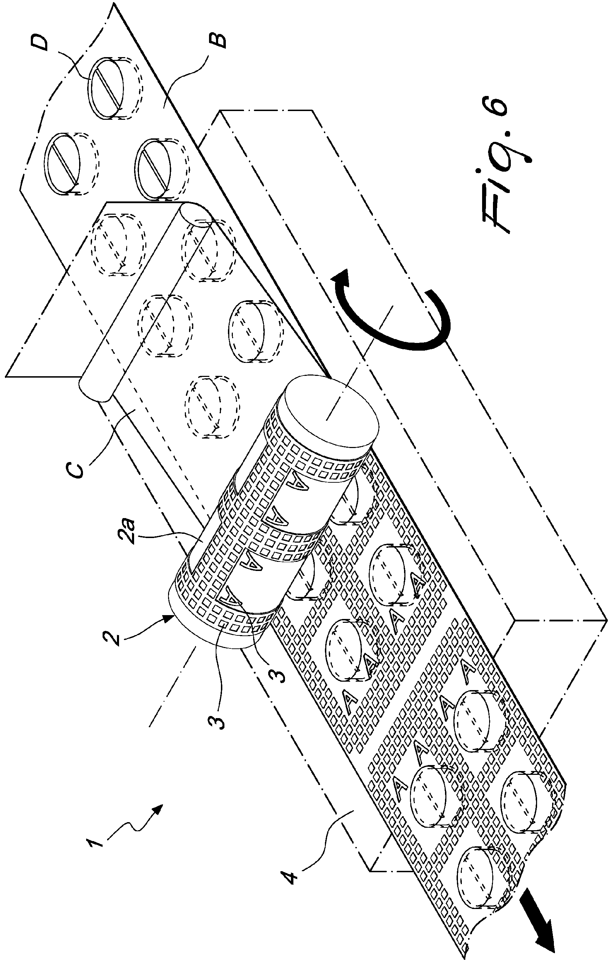

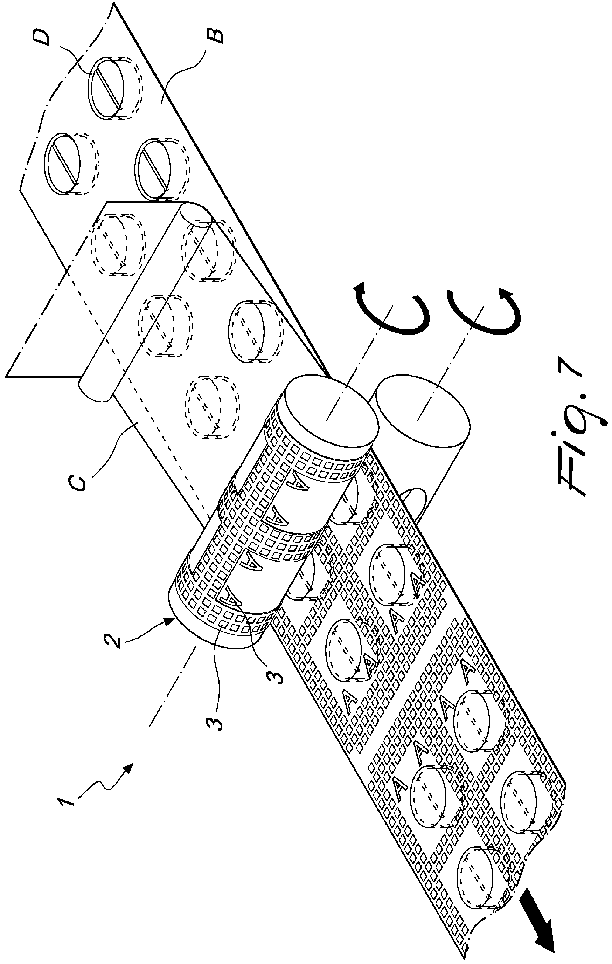

Alternatively, there is also an embodiment (shown by way of non-limiting example in the accompanying Figures 6 and 7) in which the external active surface of the presser 2 is substantially cylindrical, except for the incisions 3.

In such case the presser 2 will be movable according to a stroke of rolling on the contoured abutment element 4 with the interposition of the sheet B and of the closure film C, which is juxtaposed thereon.

With particular reference to an embodiment of undoubted practical and applicative interest, the incisions 3 can advantageously define at least two substantially continuous closed ridges 3a, 3b, which are arranged around a part of the active surface 2a that is designed to abut against the rim of at least one pocket of the sheet B, with the interposition of the closure film C.

In such case the ridges 3a, 3b will provide respective closed lines of heat-sealing of the film C onto the sheet B, which are arranged concentrically along the perimeter of at least one respective pocket, with consequent isolation of the product D contained therein.

Obviously, increasing the number of concentric heat-sealing lines (and therefore increasing the number of ridges 3a and 3b that imprint them) will result in a progressive increase in the security of the isolation of the product D inside the pocket.

The isolation of the contents of the pocket produces a series of very important advantages.

Firstly it makes it possible to prevent contamination, even if the product D remains sealed in the pocket for long periods. Furthermore it makes it possible to reduce the spaces between two contiguous pockets in the sheets with pockets B (if the pockets are well isolated by virtue of the presence of the heat-sealing lines defined by the ridges 3a, 3b then there is no need for a large separation between the pockets): this will make it possible to provide sheets with pockets B that are smaller but able to contain the same number of products (with consequent reduction of costs of the relevant material, of the pollution of that material, and of the energy consumed for the respective production). Alternatively, for the same dimensions of a blister pack A it will be possible to have a larger number of pockets (and therefore of products) in it. There will also be the advantage of ensuring a greater stability of the heat-sealing, even for very extended periods.

Advantageously, the ridges 3a, 3b defined by the incisions 13 could positively have different heights.

This contrivance will mean a different protrusion of the incisions 3 from the bottom.

This will make it possible to design the presser 2 so that its surface 2a ensures (during the compression exerted on the film C and on the sheet B during their heat-sealing) compensation for variations in the thickness of the sheet with pockets B (which occur generally in the vicinity of each pocket) and in the extent of their abutment area on the sheet with pockets B.

Indeed, during the manufacturing step of the sheet with pockets B the pockets are formed starting from a flat sheet: the material that constitutes the flat sheet, during the shaping necessary in order to provide the pockets, will undergo stretching that will locally reduce right around the perimeter of the pocket. The presence of ridges 3b that protrude to a greater extent right in the region of the presser 2 that will abut against the rim of the perimeter of each pocket (in which, as explained, a reduction of the thickness occurs) will ensure the formation of a stable line of heat-sealing at that rim.

Similarly, it must be noted that, when compressing the film C onto the sheet B, at first regions of the sheet containing pockets the presser will abut against a surface of appreciably smaller area, with respect to the area of the surfaces of second regions without pockets. At these second regions, for the same force exerted by the presser 2, the pressure will be less (since the area of the respective surface is greater) than the pressure applied in the first regions. Through a specific variation of the height of the ridges 3a and 3b it is possible to guard against this problem, thus ensuring that the pressure exerted by each single ridge 3a, 3b in each part of the sheet with pockets B is the same.

It should be noted that such contrivances can also ensure the adoption of lower heat-sealing temperatures for the surface 2a of the presser 2, which makes it possible to use sheets C that comprise text or designs printed in ink which, otherwise, with higher temperatures, could be damaged. Furthermore, the reduction of the temperature for heat-sealing the surface 2a also guards against the generation of toxic fumes from the evaporation of substances from the film C or from the sheet B (to the advantage of the safety of the persons working proximate to the apparatus 1 according to the invention).

As illustrated previously, the possibility exists of providing an embodiment of the apparatus 1 in which the pressers 2 are two in number.

These two pressers 2 can be both advantageously provided with incisions 3 defining the at least one substantially continuous and closed ridge 3a, 3b on a respective surface 2a.

During the heat-sealing of the film C onto the sheet with pockets B, these components will be clamped between at least respective portions of such mutually opposite pressers 2, which will profitably be configured to imprint respective closed heat-sealing lines around at least one pocket.

It is convenient to note that the plurality of incisions 3 can be arranged in at least one specific region of the surface 2a according to a predefined pattern that comprises at least one module having a contour chosen from a lettering, a design, a logo, a geometric grid, a fancy grid, a drawing, a QR code, a matrix code, a bar code and a combination thereof.

In this embodiment, furthermore the region of the surface 2a in which such incisions 3 are arranged according to the previously-identified module can usefully be constituted by a removable punch 3c and can be replaced with another punch 3c. Such other punch 3c will also be provided, on its terminal face, with incisions 3 arranged according to a different module.

The possibility of imprinting heat-sealing lines on the blister pack A according to specific modules is extremely advantageous because it constitutes a weapon against counterfeiting.

It is in fact possible to provide grids of fancy heat-sealing lines that will be difficult to copy, in so doing providing an excellent method of identification of the original product.

Furthermore it will be possible to imprint special encodings that will make it possible to track the blister pack A from its production to the shelf where it is sold. Such special encodings, in order to guard against attempts at counterfeiting, can be subject to periodic changes (via the substitution of the punch 3c that supplements it), so that only the manufacturer can associate each production batch with the respective code with precision, so enabling the manufacturer to identify it with precision and confidently distinguish it from any counterfeit batches.

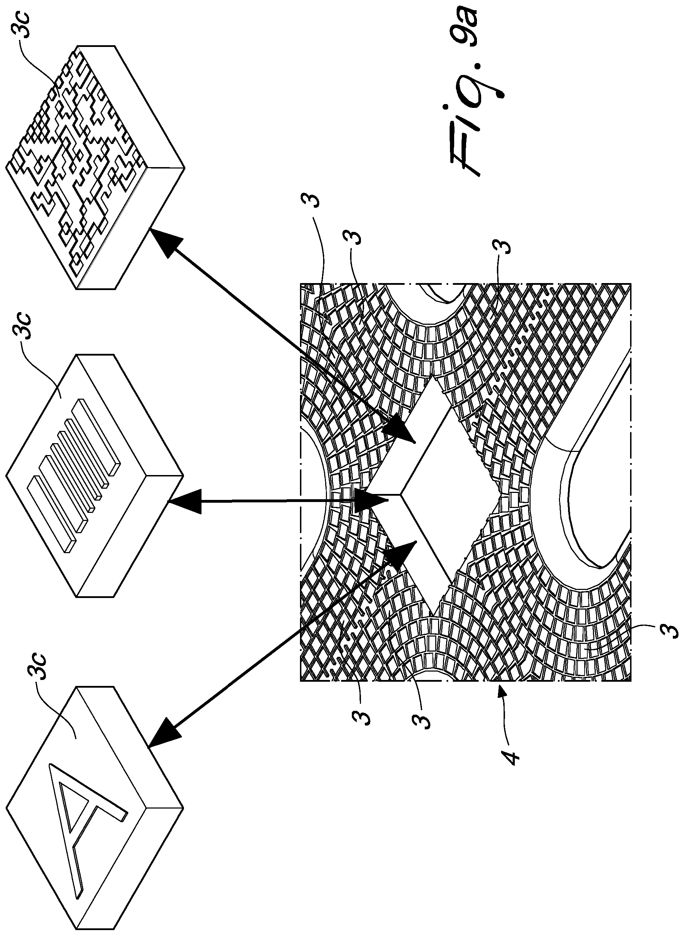

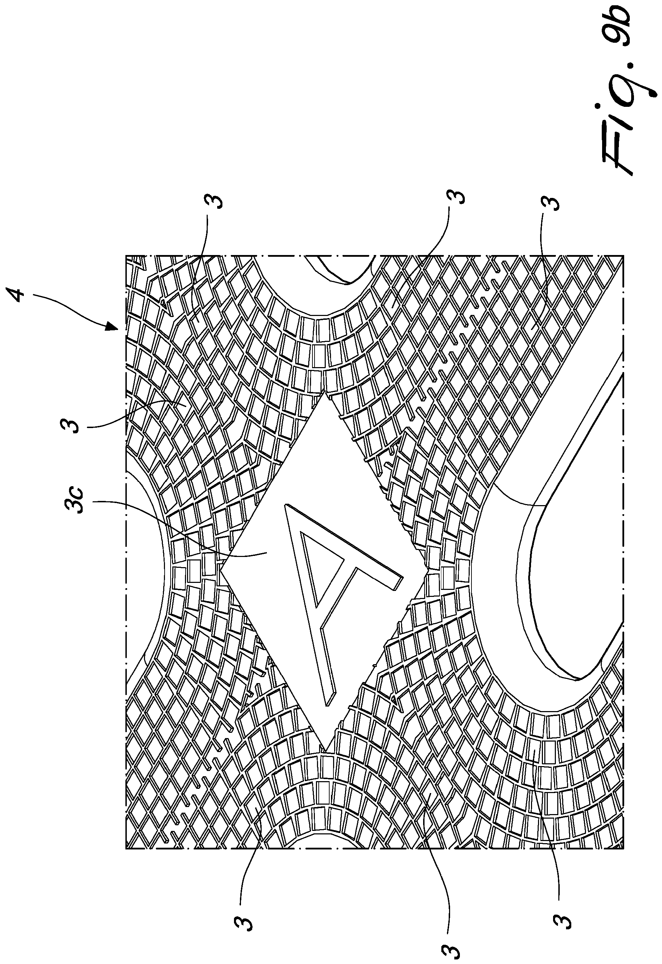

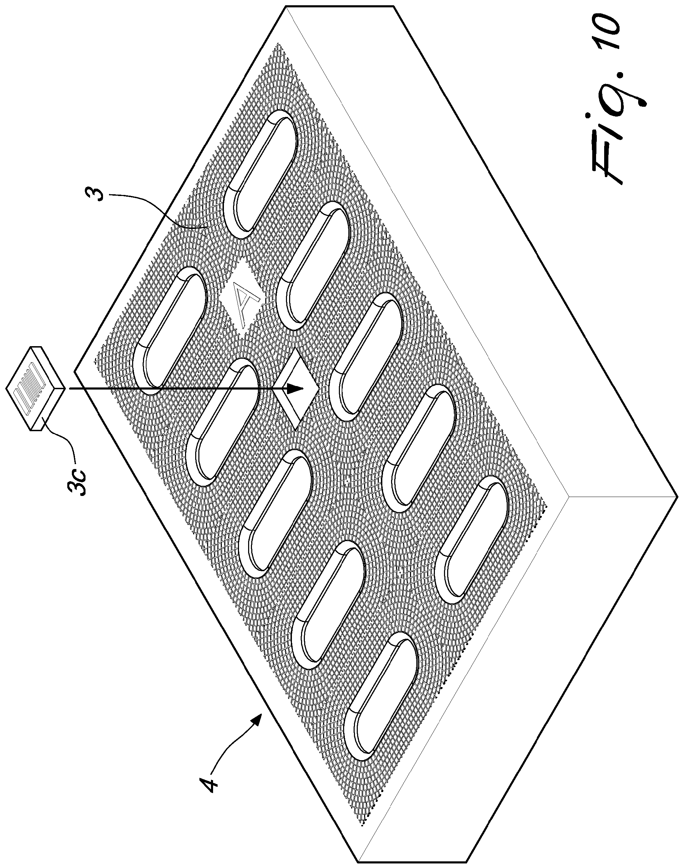

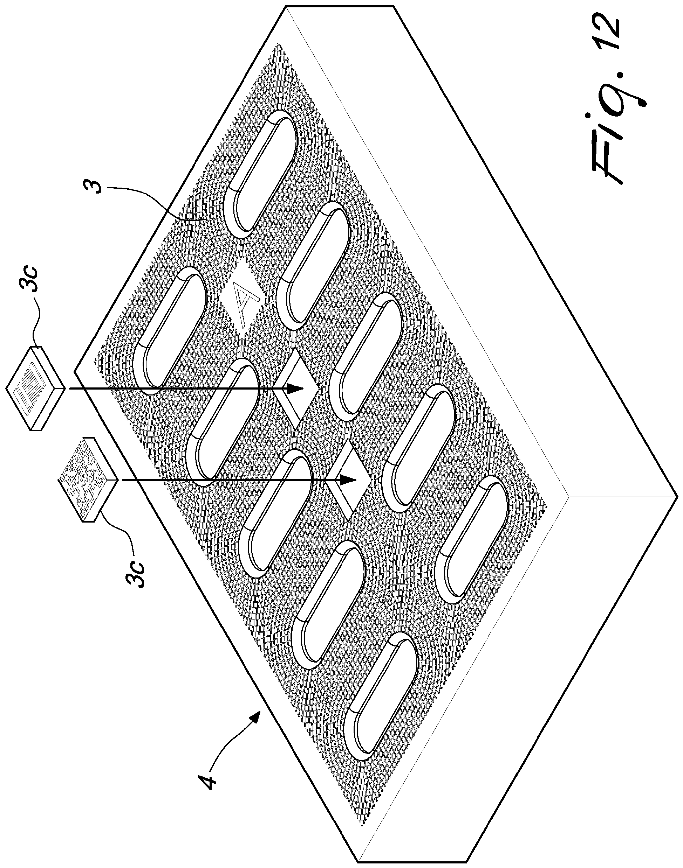

The incisions 3 contained on the punch 3c can represent a pharmacode (like the one shown in the removable punch 3c shown in the center in Figure 9a and in Figure 10) or a data matrix (like the one shown in the second removable punch 3c shown on the right in Figure 9a and in Figure 12 at bottom left).

A pharmacode, also known as a Pharmaceutical Binary Code, is a bar code used in some countries in the pharmaceutical sector as a packaging control system.

A data matrix is a two-dimensional bar code in the form of a matrix, composed of black and white cells (or modules) arranged inside a rectangular or square pattern.

Purely for the purposes of non-limiting example, it should be noted that the incisions 3 can be made by laser: in this case the material onto which the laser beam is directed will thus be heated so intensely by the incident ray that the material will evaporate or burn. The laser engraving thus obtained is permanent and highly resistant to abrasion.

Laser engraving is therefore as simple as a printing process: first of all a scoring pattern is created using a graphic software program; subsequently it will be possible to use the printer driver to send the graphics to the laser which will engrave the pattern on the active surface 2a of the presser 2.

The incisions made by the laser can be of the raster type, where the graphic pattern created by the pixels that constitute it, is engraved line by line and point by point, or of the vector type, where the graphic pattern is constituted by curves and lines traced by the laser one after the other, "vector by vector", and engraved at the same time (vector engraving is often called "scoring").

Raster engraving is the appropriate method for applications on large surfaces like letters, images, large filled areas.

Vector engraving is more suitable where just thin lines are to be engraved.

For mechanical engraving of a metallic (or other) surface, generally it is necessary to immobilize the piece to be worked on: this operation requires time and can even damage the material. In laser engraving these steps are not necessary: the laser engraving occurs in fact without contact, does not produce shavings and, with respect to mechanical engraving, creates extremely low amounts of dust. All this contributes to reducing the times and costs of production.

Engraving the material without contact using a laser further eliminates the cost of cutters and drills (in which the tools are subject to wear and need to be periodically honed and/or replaced).

Laser engraving technology makes it possible to produce extremely refined decorative elements with maximum precision: in practice it is possible to use a laser to engrave and mark anything that it is possible to draw.

However, the possibility is not ruled out of applying the teachings of the present invention using different kinds of processing, such as photoengraving or stock-removal machining.

With particular reference to a possible embodiment of undoubted practical interest, illustrated for the purposes of non-limiting example, it should be noted that with the laser technique it will be possible to make incisions 3 of any shape and type: in particular, with reference to what is shown for the purposes of example by the accompanying figures (without this determining any limiting effect on the scope of protection of the present invention) the incisions 3 can have any shape and be mutually aligned according to a predefined pattern. Such alignment will ensure the definition of continuous ridges 3a, 3b with a predefined orientation (for example concentric with respect to the pocket) which, during compression, will be imprinted on the film C and on the sheet B, thus ensuring that the product D contained in the pocket will be perfectly isolated and confined (with no possibility of contamination) with respect to the outside environment.

This type of incisions 3 (which involve the ridges 3a and 3b) is also practicable using roller-shaped pressers 3: in the accompanying Figures 6 and 7 this option has deliberately not been shown because it is completely intuitive; the representation in Figures 6 and 7 refers to one of the infinite different patterns of arrangement of the incisions 3.

Obviously the possibility is not ruled out of making incisions 3 according to a pattern and with a structure that is completely different from that shown in the accompanying figures, while remaining completely within the scope of protection defined by this report.

The possibility is not ruled out that such incisions 3 can also be made via stock-removal machining or photoengraving.

The incisions 3 can be points, lines, correspond to surfaces of predefined extent, or the like, in order to produce specific distribution patterns thereof.

If the presser 2 and the contoured abutment element 4 are flat, their mutual translation will occur between a passive configuration, in which the presser 2 (or more precisely its active surface 2a) faces and is spaced apart from the contoured abutment element 4, and an active configuration, in which it is substantially in resting contact on the contoured abutment element 4 with the interposition of the sheet B and of the closure film C, which is juxtaposed thereon.

The pressure exerted by the presser 2 will determine the compression of the film C onto the sheet B and, by virtue of the temperature imposed on the surface 2a by the heater mentioned previously, will ensure the mutual heat-sealing with closure of the pockets.

As illustrated previously, as an alternative it is also possible to provide the external active surface 2a of the presser 2 in cylindrical form.

In this case the presser 2 (or more precisely its active surface 2a) will profitably be movable according to a stroke of rolling on the contoured abutment element 4, substantially resting on at least one part thereof with the interposition of the sheet B and of the closure film C, which is juxtaposed thereon.

By rolling on the contoured abutment element 4, the presser 2 will exert a localized pressure (at the generatrix thereof progressively in contact with the closure film C juxtaposed on the sheet B) which, in combination with the high temperature at which the surface 2a will be maintained by way of the above-mentioned heater), will enable the heat-sealing of the film C onto the sheet B with consequent closure thereof (and segregation/isolation of the products D contained in the pockets).

In any case the pressure exerted by the presser 2 on the film C and on the sheet B will also determine the imprinting on the surface of the film C of a pattern in relief (a succession of convexities and concavities) of shape and dimensions complementary to those of the incisions 3 on the surface 2a (which will also comprise the heat-sealing lines imprinted by the ridges 3a and 3b).

This pattern in relief on the blister pack A will be extremely precise and therefore it will be possible for it to contain (in addition to the ridges 3a and 3b that define a closed line around each pocket for the perfect segregation of the product D contained in it) wordings, designs, logos, decorations, graphic indications and any combination thereof.

It should be noted that the external active surface 2a of the presser 2 could positively be shaped like a portion of cylinder delimited between planes that are mutually incident (i.e. shaped like a sector of cylinder) at the respective axis of symmetry and which define a angle of predefined breadth.

In this manner the rolling of such surface 2a would be limited to an angular portion of breadth that does not exceed the breadth of the angle that delimits it: therefore there could be specific ancillary movements of the presser 2 in order to align it, in each instance, with the film C to be heat-sealed to the sheet B.

Also in the case of cylindrical pressers 2 or pressers shaped like cylinder sectors or in any case provided with a curved surface 2a, the possibility exists of providing an encoding symbol on the surface (by way of a specific configuration of the incisions 3) which can enable the tracking of the blister pack A produced using that presser 2.

In this case too it is possible for such encoding symbol to be arranged on a removable punch 3c, in order to enable the manufacturer of the blister pack A to modify the code that will be imprinted by the surface 2a onto the face of the blister pack A (by substituting the punch 3c installed on the presser 2 with another punch bearing a different encoding symbol).

The present invention also relates to a presser 2 for apparatuses 1 for closing blister packs A that comprises, on at least one external active surface 2a thereof, a plurality of surface incisions arranged according to a predefined pattern that comprises at least one module having a contour chosen from a lettering, a design, a logo, a geometric grid, a fancy grid, a drawing and a combination thereof and provided with at least one closed and continuous ridge 3a, 3b in the region of the external perimeter of the blister pack A.

By virtue of such ridge 3a, the presser 2 will imprint a closed and continuous heat-sealing line around each pocket of the sheet B, thus ensuring that the heat-sealing of the film C is optimal and ensures the perfect segregation (isolation) of the product D with respect to the outside environment.

The incisions on the external active surface 2a of such presser 2 can be incisions provided using a laser, distributed according to the predefined pattern. The possibility is not ruled out of providing such incisions 3 using a different technique (with respect to using a laser), such as photoengraving or stock-removal machining, although this in many cases does not make it possible to obtain levels of precision and quality of machining comparable to those obtained using a laser.

The presser 2 according to the invention can advantageously be made of a metallic material of type preferably chosen from steel, copper, aluminum, silver, metallic alloys and combinations thereof.

In particular, metals or metallic alloys can be chosen that have the ideal conductivity for each specific application (for example favoring metals with high thermal conductivity if it is planned to execute the operations for heat-sealing the film C onto the sheet B rapidly, or selecting the value of thermal conductivity best suited to the type of pressure exerted, to its duration, and to the specific shape structure of the presser 2).

It should be noted that, if the pattern of surface incisions 3 is obtained using a laser, since this technology can operate on any material, when selecting the metallic material with which to make the presser 2 the material best suited for the service can be then chosen, without worrying about the machining involved in making the incisions 3. However, if different types of machining are adopted to make the incisions 3, then it will be necessary to use exclusively materials on which it is possible to operate using such types of machining.

It should be noted that, according to the invention, the presser 2 can usefully be of a type preferably chosen from a presser plate, provided with the incisions on the surface 2a that is intended to abut against the closure film C, and a presser roller, provided with the incisions on its external lateral surface 2a.

In each of these cases the possibility exists of providing an encoding symbol on the surface 2a by way of the incisions 3 (with tracking and anti-counterfeiting functions). The possibility is not ruled out of such encoding symbol being imprinted on a removable punch 3c, the periodic substitution of which with other, equivalent punches (but bearing a different encoding symbol) can constitute an excellent and innovative instrument for tracking and anti-counterfeiting.

The protection obtained by the present patent description further extends to a method for closing a blister pack A constituted by a sheet with pockets B and a closure film C, which comprises a plurality of steps.

A preliminary first step entails the engraving of an external active surface 2a of a presser 2 in order to provide a plurality of surface incisions 3 which are arranged according to a predefined pattern that comprises at least one module having a contour chosen from a lettering, a design, a logo, a geometric grid, a fancy grid, a drawing and a combination thereof.

In particular such incisions 3 will comprise at least one ridge 3a, 3b shaped like a closed and continuous line, arranged at the surface portion 2a that will abut against a region around the perimeter of a pocket.

A second step entails arranging a sheet with pockets B, which accommodates at least one product D in each pocket, on a component chosen from a contoured abutment element 4 and an additional presser 2 (of shape and dimensions complementary to the cylinder described previously) which is configured to accommodate the sheet B without deforming the pockets (the component will comprise seats with a distribution similar to that of the pockets on the sheet B which can accommodate those pockets, while the remaining part of the sheet B is resting on the flat part of the component).

A subsequent third step entails the juxtaposition of the closure film C on the sheet with pockets B.

In a fourth step it will be necessary to mechanically force, by exerting a pressure of predefined value, the external active surface 2a of the presser 2, which is kept at a specific temperature by a respective heating element associated therewith, onto the film C for the heat-sealing thereof onto the sheet with pockets B. During this heat-sealing operation, a surface pattern that is complementary to the predefined pattern of the active surface 2a will also be imprinted on the back of the blister pack A (i.e. the face that comprises the film C).

The ridges 3a and 3b will be imprinted on the film C and on the sheet B so as to define closed and continuous heat-sealing lines around each pocket, which will ensure the perfect segregation (isolation) of the product D present inside the pocket from the outside environment.

It should be noted that by virtue of the invention it will be possible to dry-imprint (during the heat-sealing of the film C onto the sheet B) any and all information desired on the back of the blister pack A. In this manner it is possible to reduce the use of inks, in so doing contributing to the minimization of the pollutants used in the operations to package the products D. In the known art, the blister pack A is generally printed (with wordings, logos and information) after the heat-sealing of the film C onto the sheet B; but if the reel of closure sheets C were to be pre-printed, then by virtue of the invention it would be possible to eliminate any fumes caused by the high temperatures for heat-sealing the film C onto the sheet B, which in any case influence the ink already printed on the film C (potentially compromising the quality of the printing). In fact the specific surface shape of the presser 2 (bearing the ridges 3a and 3b) will make it possible to securely and stably delimit each product D in its respective pocket and, therefore, for a correct and complete heat-sealing of the film C onto the sheet B it will be sufficient to heat the surface 2a of the presser 2 to a temperature lower than that required in the known art (in so doing avoiding damaging the film C and any printed designs present on it, while consuming less energy and minimizing the fumes).

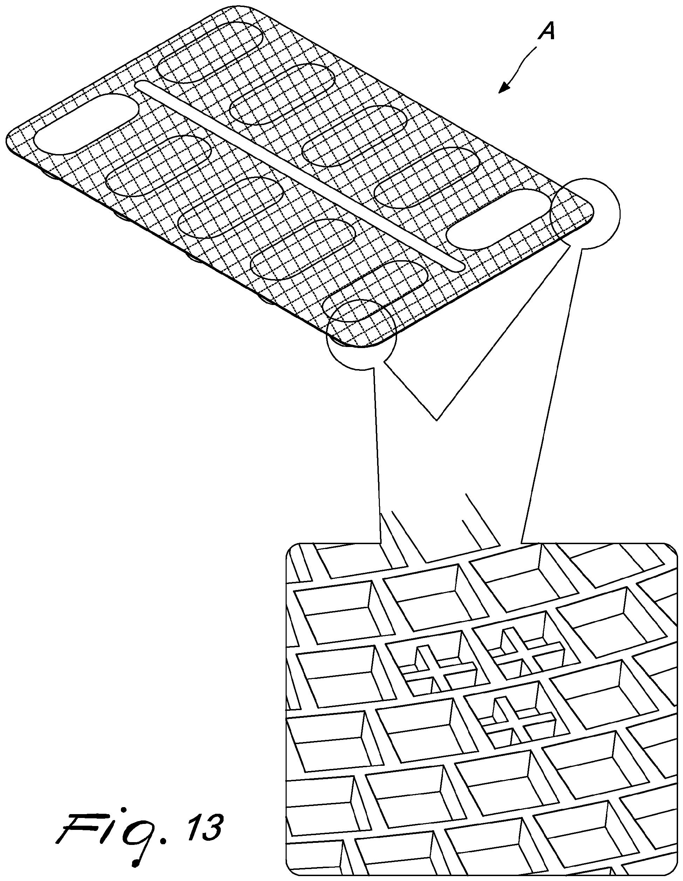

From a commercial and anti-counterfeiting point of view, by virtue of the present invention it will be possible to easily insert special logos or designs or any graphic sign with a unique product identification function (including of a type, so as to be identifiable exclusively by its maker and/or by specifically authorized persons, thus constituting a form of fingerprint of the original product), the result of which, on the blister pack A, is shown in a possible embodiment by way of example in the accompanying Figure 13, so rendering, in the presser 3, the package (the blister pack A) recognizable and unique, which therefore cannot be imitated/counterfeited via simple printing. It is furthermore possible to adopt pre-printed closure sheets C, with consequent associated reduction in costs (printing on the already-formed blister pack A is a more expensive and complex operation than simply printing on the film C).

With regard to the quality of heat-sealing (closure of the blister pack A), it can furthermore be said that the possibility of designing any pattern of incisions 3 makes it possible to imprint a plurality of concavities and convexities on the back of the blister pack A right up to the rim that delimits the profile of each pocket (along which the closed heat-sealing lines defined by the ridges 3a and 3b will be present), thus ensuring that heat-sealing delineations are imprinted that ensure the integrity and the isolation of the product D contained therein.

Furthermore the possibility of varying, even by 1 or 2 hundredths of a millimeter, the depth of the incisions 3 of the presser 2 or the height of the ridges 3a, 3b (projections) that are present thereon after it has been laser-engraved, in the regions where, in order to ensure the seal, it is necessary to increase the specific heat-sealing pressure, favors an ideal bonding of the film C to the sheet B. In fact, at some predefined regions, it is possible to provide ridges 3b of higher height than the ridges 3a. The ridges 3b (which protrude further from the surface 2a) must be located at the areas of the sheet B where the sheet may be thinner (for example in the vicinity of each pocket, regions where the stretching of the material owing to the formation of the pocket has certainly caused a reduction in the thickness).

Similarly it is possible to adopt ridges 3b of higher height at the regions of the sheet B with no pockets: in such regions the force with which the presser 2 is pushed onto the film C and onto the sheet B is the same as the force applied in the regions with pockets. This evenness of force implies an unevenness of pressure exerted (pressure is defined as force per unit of surface). By varying the height of the ridges 3a and 3b in the manner indicated above, it will be possible to obtain also the same pressure in the regions of the sheet B where there are no pockets, by virtue of the greater protrusion of the ridges 3b in such positions.

Finally, the present invention makes it possible to optimize the heat exchange by using particularly high-performing materials and by selecting the areas where to concentrate the heat.

The optimization of the heat-sealing with respect to heat-sealing with traditional methods translates to extending the shelf life of the products D (the blister packs A ensure a better isolation/segregation of the product D that they contain, by virtue of the closed heat-sealing lines imprinted by the ridges 3a, 3b) and also to a superior efficiency of consumption of the closing assembly 1 according to the invention with respect to conventional assemblies. Furthermore the assembly 1 according to the invention also offers the possibility to further reduce the dimensions of the primary packaging (the blister packs A can be smaller with pockets closer together since each pocket is perfectly isolated from the outside environment by virtue of the heat-sealing lines imprinted by the ridges 3a and 3b), and as a consequence of the secondary packaging, which translates to a superior efficiency of the logistics chain.

Finally it should be noted that the assembly according to the invention, although being preferably indicated for closing blister packs A, can also be conveniently used for heat-sealing other packages such as strip packs (such as those used for aspirin), sachets and packages produced with the flowpack and stick pack techniques.

Finally it should be noted that the production costs of pressers 3 made with laser surface engraving are lower than those entailed using photoengraving (often lower even than those entailed with stock-removal machining).

As already previously illustrated, by way of the apparatus 1 according to the invention it is possible to imprint knurlings on the rear surface of the blister pack A which are also arranged precisely along the rim of each pocket of the sheet B: in this manner each product D will be perfectly segregated in its pocket (by way of the heat-sealing lines imprinted by the ridges 3a and 3b), and will be perfectly protected from any possible contamination originating from the outside environment. The possibility of providing the grid in any form will make it possible to imprint knurlings with radial progression (with respect to each pocket) or along concentric lines as in the case of the ridges 3a and 3b (again with respect to the pocket), but the possibility is not ruled out of imprinting knurlings of a completely different type, including for the purpose of giving the blister pack A originality and recognizability in the eyes of the consumer.

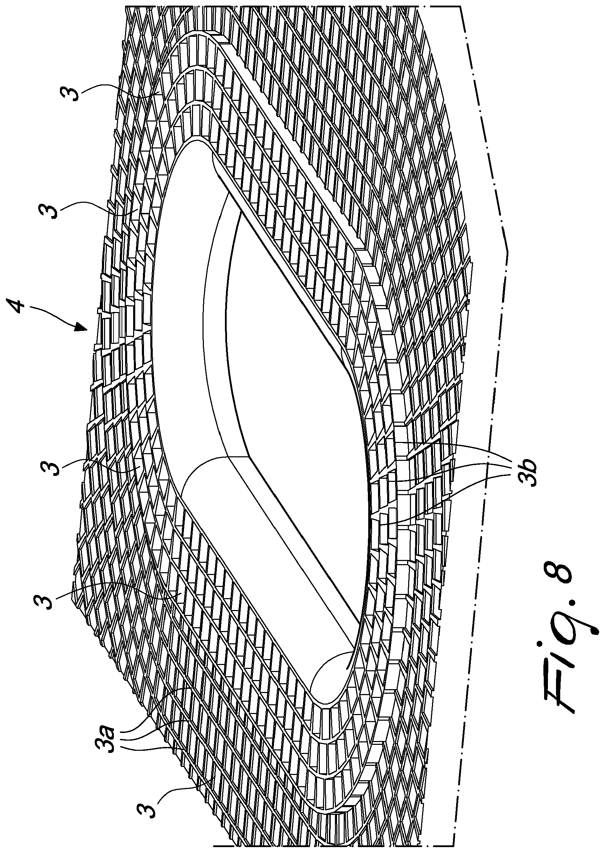

The possibility is not ruled out of making the incisions 3 on the contoured abutment element 4 (as shown by way of non-limiting example in the enlargement of Figure 8): this will imprint the knurling according to a predefined pattern on the sheet with pockets B, operating on the opposite surface from the one where the film C is to be heat-sealed.

In such case the depth of the incisions 3 and the protrusion of the ridges 3a, 3b delimited thereby must be preferably such as to generate a deformation of the entire thickness of the sheet with pockets B, thus also determining an effect on the film C, favoring the complete and stable adhesion thereof.

In any case it is also possible for both the presser 2 and the contoured abutment element 4 to be provided with incisions 3, which must preferably be shaped complementarily. In this manner, when the sheet with pockets B, on which the film C is juxtaposed, is clamped, a mutual engagement will take place of the presser 2 and of the contoured abutment element 4 (the corresponding incisions 3 and ridges 3a, 3b of which will interpenetrate each other, with the interposition of the sheet B and the film C), in so doing producing an optimal bonding of film C and sheet B and giving the blister pack A an appearance that is particularly original and distinguishable.

In particular this is made possible by the type of machining with which the incisions 3 will be made (on the presser 2 and, optionally, on the contoured abutment element 4) which will need to ensure an extremely high level of quality and precision (so as to ensure their reciprocal mating when being clamped together). It should be noted that a type of machining of these surfaces (of the presser 2 and of the contoured abutment element 4) has been identified as particularly indicated, which is executed using a laser (although the possibility is not ruled out of using different types of machining as well, such as photoengraving and stock-removal machining). Types of machining of these surfaces executed using new technologies or advances in existing technologies will be considered equivalent (by way of example, if, in the future, by using stock-removal machining or photoengraving it should become possible to achieve levels of precision and quality in the provision of the incisions 3 as high as those made possible by the removal of material using a laser, these would be considered equivalent and therefore included as a preferred embodiment of the present invention).

Advantageously the present invention solves the above mentioned drawbacks, by providing an apparatus 1 for closing blister packs A that makes it possible to imprint knurlings of any shape and type on the blister packs A during the bonding of the closure film C to the sheet with pockets B, thus ensuring an optimal segregation, isolation of the product D with respect to the outside environment (the heat-sealing lines imprinted by the ridges 3a and 3b, being closed and continuous, will ensure such isolation).

More precisely, the apparatus 1 will not solely be capable of imprinting simple knurlings, but will also be capable of imprinting designs, wordings, logos, decorations and combinations thereof, extremely precisely and accurately.

Conveniently the apparatus 1 according to the invention ensures the provision of concavities and convexities imprinted on the surface of the blister pack A covered by the closure film C that are extremely precise in shape and dimensions: this option cannot be achieved in any way using conventional apparatuses 1, provided with conventional pressers 2.

Advantageously the apparatus according to the invention makes subsequent printing operations on the closure film C heat-sealed onto the sheet with pockets B potentially superfluous, in that any graphic indications, wordings, logos and designs can be directly imprinted during the heat-sealing of the film C to the sheet B.

Furthermore, the apparatus 1 according to the invention makes it possible to use pre-printed sheets C, since, by virtue of the particular shape of the surface 2a of the presser 2 (bearing the ridges 3a and 3b), it is possible to obtain an optimal heat-sealing of the film C to the sheet B even by heating this surface to temperatures that are much lower than those used in the known art: such lower temperatures do not damage the inks used for printing the film C (differently from the temperatures used in the known art).

Positively the apparatus 1 according to the invention is easily and practically implemented and is of low cost: such characteristics make the apparatus 1, the presser 2 and the method according to the invention innovations that are certain to be used.

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

The disclosures in Italian Patent Application No. 102022000015432 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus for closing blister packs (A) which are constituted by a sheet with pockets (B) and a closure film (C) and are designed to accommodate, within each pocket of the sheet (B), at least one product (D), **characterized in that** it comprises at least one presser (2) which is provided on an external active surface (2a) thereof, designed to come into contact with said closure film (C), with a plurality of incisions (3) which are arranged according to any predefined pattern and define at least one continuous closed ridge (3a, 3b) which is arranged around a part of said active surface (2a) that is designed to abut against a rim of at least one said pocket of said sheet (B) with the interposition of said closure film (C), said presser (2) being associated with a heating element configured to maintain said external active surface (2a) at a specific temperature; said at least one ridge (3a, 3b) providing a closed line of heat-sealing of said film (C) onto said sheet (B), arranged along the perimeter of at least one respective pocket, with consequent isolation of the product (D) contained therein.

2. The apparatus according to claim 1, **characterized in that** it comprises a contoured abutment element (4) for the at least partial accommodation of said sheet with pockets (B), which is configured to accommodate said sheet (B) without deforming said pockets and to tolerate a mechanical pressure applied by said presser (2) in a step of heat-sealing said film (C) onto the surface that faces it of said sheet (B).

3. The apparatus according to (claim 2) one or more of the preceding claims, **characterized in that** said external active surface (2a) of said presser (2) is substantially flat except for said incisions (3), said presser (2) being movable according to a stroke for moving toward and away from said contoured abutment element (4), between a passive configuration, in which it faces and is spaced apart from said contoured abutment element (4), and an active configuration, in which it is substantially in resting contact on said contoured abutment element (4) with the interposition of said sheet (B) and of said closure film (C), which is juxtaposed thereon.

4. The apparatus according to claim 3, **characterized in that** said external active surface of said presser (2) is substantially cylindrical except for said incisions (3), said presser (2) being movable according to a stroke of rolling on said contoured abutment element (4) with the interposition of said sheet (B) and said closure film (C), which is juxtaposed thereon.

5. The apparatus according to (claim 1) one or more of the preceding claims, **characterized in that** said incisions (3) define at least two substantially continuous closed ridges (3a, 3b) which are arranged around a part of said active surface (2a) that is designed to abut against the rim of at least one said pocket of said sheet (B) with the interposition of said closure film (C), said ridges (3a, 3b) providing respective closed lines of heat-sealing of said film (C) onto said sheet (B), which are arranged concentrically along the perimeter of at least one respective pocket, with consequent isolation of the product (D) contained therein.

6. The apparatus according to claim 5, **characterized in that** said ridges (3a, 3b) defined by said incisions (13) have a different height, and therefore a different protrusion from the bottom of said incisions (3), in order to compensate variations of the thickness of said sheet with pockets (B) in the vicinity of each pocket and of the extent of their abutment area on said sheet with pockets (B).

7. The apparatus according to (claim 1) one or more of the preceding claims, **characterized in that** said pressers (2) are two in number, both provided with said incisions (3) which define at least one substantially continuous and closed ridge (3a, 3b) on a respective surface (2a), in the step for heat-sealing said film (C) onto said sheet with pockets (B) said components being clamped between at least respective portions of said mutually opposite pressers (2), configured to imprint at least closed heat-sealing lines around at least one pocket.

8. The apparatus according to (claim 1) one or more of the preceding claims, **characterized in that** said plurality of incisions (3) are arranged in at least one specific region of said surface (2) according to a predefined pattern that comprises at least one module having a contour chosen from a lettering, a design, a logo, a geometric grid, a fancy grid, a drawing, a QR code, a matrix code, a bar code and a combination thereof.

9. The apparatus according to claim 8, **characterized in that** said region of said surface (2a) in which said incisions (3) are arranged according to said module is constituted by a removable punch (3c) which can be replaced with another punch (3c) that is provided, on its terminal face, with incisions (3) arranged according to a different module.

10. A method for closing a blister pack (A) constituted by a sheet with pockets (B) and a closure film (C), **characterized in that** it comprises:
- a preliminary first step of laser engraving of an external active surface (2a) of a presser (2) in order to provide a plurality of surface incisions (3) which are arranged according to a predefined pattern and are arranged according to any predefined pattern and define at least one closed continuous ridge (3a, 3b) arranged around a part of said active surface (2a) that is designed to abut against the rim of at least one pocket of said sheet (B) with the interposition of said closure film (C);
- a second step of arranging a sheet with pockets (B), which accommodates at least one product (D) within each pocket, proximate to said presser (2);
- a third step of juxtaposition of said closure film (C) on said sheet with pockets (B);
- a fourth step of mechanical forcing according to a pressure of predefined value of said external active surface (2a), kept at a specific temperature by a respective heating element associated therewith, of said presser (2) on said film (C) for the heat-sealing thereof onto said sheet with pockets (B) and for the imprinting of a surface pattern that is complementary to said predefined pattern of said active surface (2) on the face of said blister pack (A) that comprises said closure film (C) with consequent definition of at least one continuous and closed external heat-sealing line proximate to the perimeter of said at least one respective pocket, imprinted by the at least one ridge (3a, 3b).
